Europäisches Patentamt

European Patent Office

Office européen des brevets

(11) Publication number: **0 359 980**

**A2**

## (12) EUROPEAN PATENT APPLICATION

(21) Application number: **89114815.7**

(22) Date of filing: **10.08.89**

(51) Int. Cl.⁵: **G01L 9/00**

(30) Priority: **20.09.88 IT 6783788**

(43) Date of publication of application:
**28.03.90 Bulletin 90/13**

(84) Designated Contracting States:
**DE ES FR GB**

(71) Applicant: **SICEB S.p.A.**
**Via Rio Galletto 1**
**I-17045 Legino (Savona)(IT)**

(72) Inventor: **Bianco, Giovanni c/o Siceb S.p.A.**
**Via Rio Galletto 1**
**I-17045 Legino Savona(IT)**

(74) Representative: **Bosotti, Luciano et al**
**c/o Jacobacci-Casetta & Perani S.p.A. Via**
**Alfieri, 17**
**I-10121 Torino(IT)**

(54) **A pressure transducer for measuring the pressure of a fluid, particularly for measuring oil pressure in a vehicle.**

㊼ A transducer for measuring the pressure of a fluid, particularly for measuring oil pressure in a vehicle, comprises:
- a plurality of electrical switches (I1, I2, I3) operable differentially by the fluid pressure,
- an electrical circuit associated with the switches, and
- indicator means (11) connected to the circuit for providing a signal indicative of the fluid pressure in dependence on the number of switches (I) which are in the closed condition.

FIG. 1

**A pressure transducer for measuring the pressure of a fluid, particularly for measuring oil pressure in a vehicle**

The present invention relates to a pressure transducer for measuring the pressure of a fluid, particularly for measuring oil pressure in a vehicle.

Pressure transducers of this type generally cause the resistance of an electrical circuit associated with the transducer to vary in correspondence with variations in the fluid pressure, the variation of the resistance being detected by an electromagnetic instrument for indicating the pressure level situated on the dashboard of the vehicle. Known pressure transducers usually cause the resistance to vary continuously in dependence on the fluid pressure. This variation is achieved, for example, by means of a system of levers which convert the deformation of a plate exposed to the fluid pressure into the movement of a sliding contact of a rheostat. Known transducers are often not very reliable because of the play and friction in the lever systems and the sliding contacts. Moreover, they are prone to inaccuracies due to variations of the resistance with temperature.

The object of the present invention is to provide a pressure transducer which is simpler than known transducers and does not have the above disadvantages.

According to the present invention, this object is achieved by the provision of a pressure transducer which comprises a plurality of electrical switches which are operable differentially by the fluid pressure, an electrical curcuit associated with the switches, and indicator means connected to the circuit for providing a signal indicative of the fluid pressure in dependence on the number of switches which are in the closed condition.

In a first embodiment in which the indicator means comprise an electromagnetic instrument for measuring the voltage in the circuit, the latter includes a plurality of resistors each in parallel with the respective switch.

In a variant, the indicator means comprise a plurality of indicator lamps each of which is associated with one of the switches, so that the operation of each switch causes the respective lamp to be lit.

The switch which is operated at the lowest fluid pressure value is preferably a changeover switch which switches on an indicator lamp when the fluid pressure is below a predetermined value.

As will be understood, a transducer according to the present invention provides a stepped indication of the fluid pressure value. In fact, a precise indication is not strictly necessary since, for the average user, it is more useful to know whether the pressure remains within an acceptable range than to know its exact value and its fluctuations.

The transducer according to the present invention is also less susceptible to inaccuracies due to temperature variations than known transducers and is shown to be very reliable since it has neither sliding contacts nor lever systems with the related play and friction. Moreover, the device according to the invention is not very sensitive to vibrations and has a very good standard of overall quality, since its simplicity enables the production process to be more controllable.

Further characteristics and advantages of the present invention will become clear from the detailed description which follows with reference to the appended drawings, provided by way of non-limiting example, in which:

Figure 1 is an electrical diagram of a transducer according to the present invention,

Figure 2 is an electrical diagram of a variant of Figure 1, and

Figures 3 and 4 are electrical diagrams of two variants which correspond to Figure 1 and to Figure 2 respectively.

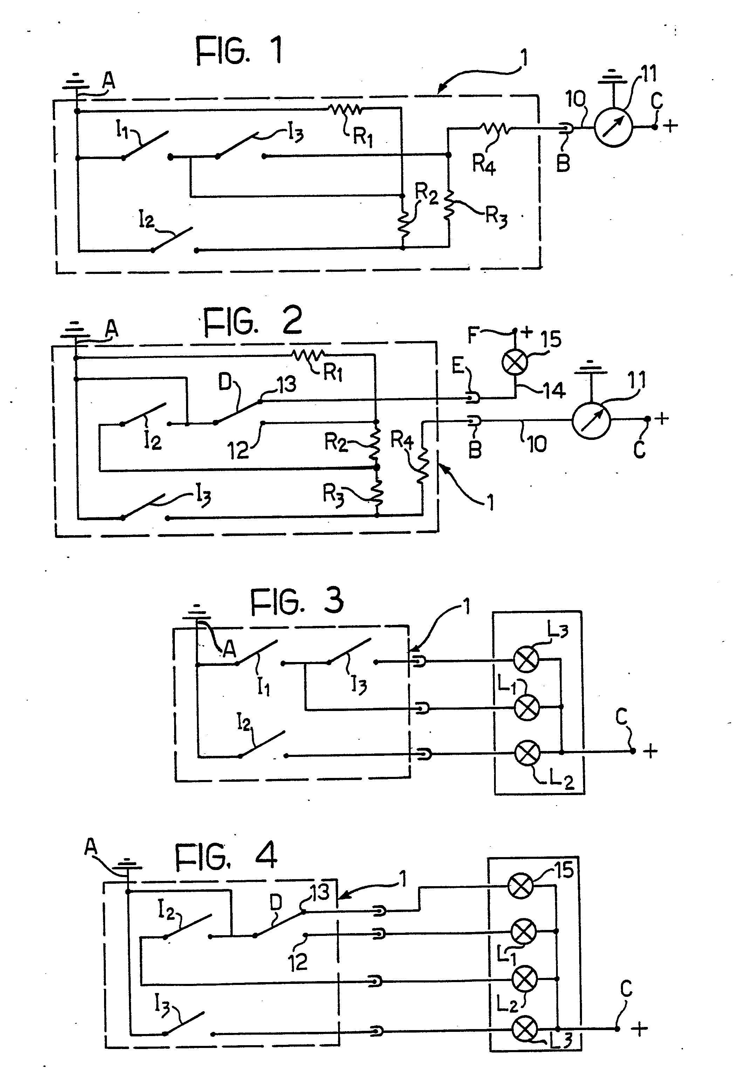

In Figure 1, an electrical diagram of a pressure transducer according to the present invention is generally indicated 1. The transducer 1 includes three switches, indicated I1, I2 and I3, which are operated by the fluid pressure. The three switches are normally open and are closed differentially when the fluid pressure exceeds predetermined operating values, indicated P1, P2 and P3 respectively; P1 (the operating pressure of the switch I1) represents a low pressure, P2 an intermediate pressure, and P3 a high pressure. Although reference is made below to the case of three switches which define three pressure ranges, the number of switches could of course be varied at will. The switches I1, I2 and I3 may be formed as described in European patent application No. 265391 (to which reference should be made) relating to a three-level regulator for motor vehicle air-conditioning systems.

The transducer 1 also includes four resistors, indicated R1, R2, R3 and R4, which are interconnected in series. In Figure 1, the switch I1 is connected in parallel with the resistor R1, the switch I2 is connected in parallel with the resistors R1 and R2, and the switch I3 is connected in parallel with the resistors R3 and R2. The series of resistors R1-4 has an end which is connected to earth at A and an end B which defines an output terminal of the transducer 1. From the terminal B, a line 10 supplies an electromagnetic instrument 11 which is connected in series and has a terminal C connected to an electrical supply (not illustrated).

When the fluid pressure is zero, the switches I1, I2, I3 are open, so that the resistance between the terminal C and earth A is equal to the sum of the resistances R1-4. If the fluid pressure is between P1 and P2 (the operating pressures of the switches I1 and I2), the switch I1 closes and the resistor R1 is cut off. In this case, the resistance between the terminal C and the earth A is given by the sum of the resistances R2-4 and the pointer of the instrument 11 consequently indicates a pressure change. The pointer of the instrument 11 will remain stationary as long as the pressure does not exceed the value P2 at which switch I2 is closed and the resistors R1 and R2 are cut off.

As can be seen, when the instrument 11 is used with the transducer 1, the pointer of the instrument moves in steps; if a gradual movement of the pointer of the instrument 11 is required, it suffices to insert a conventional integrator (not shown) in the line 10.

It is also possible to use a digital instrument 11, in which case it is necessary to insert a conventional signal converter in the line 10.

Figure 2 shows a variant of Figure 1, in which the switch I1 (the one that closes at the lowest pressure level) is replaced by a changeover switch, indicated D. One of the output contacts of the changeover switch D, indicated 12 in Figure 2, is connected to the line which interconnects the resistors R1-4, between the resistors R1 and R2. The other contact, indicated 13, is connected to an output terminal E of the transducer 1. The terminal E is connected by a line 14 to an indicator lamp 15 supplied at F by an electrical supply (not illustrated). The changeover switch D is closed against the contact 13 when the fluid pressure is below the value P1, but is closed against the contact 12 when the pressure exceeds that value. The lighting of the indicator lamp 15 thus indicates an insufficient fluid pressure value.

Figures 3 and 4 show two variants of Figure 1 and Figure 2 respectively. The instrument 11 in Figure 1 has been replaced by three indicator lamps L1, L2 and L3 in parallel with each other and connected at C to a supply. Each of the switches I1, I2 and I3 is connected in series with a respective lamp L, so that the differentiated operation of the switches I causes the successive lighting of the lamps L which indicate minimum, normal and high pressure levels. If the switch I1 is replaced by a changeover switch D as shown in Figure 4, an indication of insufficient fluid pressure is achieved as described in the previous embodiment.

If the switches I are formed with resilient cap elements, as described in the aforementioned European patent application No. 265391, a switch I - for example the switch I1 - is operated at a pressure P1 if the pressure is rising. When this critical value P1 is reached, the resilient cap element switches rapidly (in a time which can be estimated at a few hundredths of a second) to a new equilibrium position with the opposite convexity, closing the switch I. However, when the pressure decreasing, it does not return to its initial equilibrium positon at the value P1 but at a lower value P1'; once the electrical circuit has been closed at the pressure P1, the difference P1-P1' enables it to stay closed in the presence of small oscillations in pressure around that value, the circuit being opened only when the pressure variation is significant.

## Claims

1. A pressure transducer for measuring the pressure of a fluid, particularly for measuring oil pressure in a vehicle, characterised in that it comprises:
- a plurality of electrical switches (I) which are operable differentially by the fluid pressure,
- an electrical circuit associated with the switches, and
- indicator means (11, L) connected to the circuit for providing a signal indicative of the fluid pressure in dependence on the number of switches (I) which are in the closed condition.

2. A transducer according to Claim 1, in which the indicator means comprise an electromagnetic instrument for measuring the voltage in the circuit, characterised in that the electrical circuit includes a plurality of resistors (R) each in parallel with the respective switch.

3. A transducer according to Claim 1, characterised in that the indicator means comprise a plurality of indicator lamps (L) each of which is associated with one of the switches (I), so that the operation of each switch (I) switches on the respective lamp (L).

4. A transducer according to Claim 2 or Claim 4, characterised in that the switch (I) which is operated at the lowest fluid pressure is a changeover switch (D) which lights an indicator lamp (15) when the fluid pressure is below a predetermined value.

5. A transducer according to Claim 2, characterised in that the electrical circuit includes an integrator of known type.

EP 0 359 980 A2

FIG. 1

FIG. 2

FIG. 3

FIG. 4